# EUROPEAN PATENT APPLICATION

(11) **EP 4 495 576 A1**
(43) Date of publication of application: **22.01.2025**
(21) Application number: 23770288.1
(22) Date of filing: 21.02.2023
(51) Int. Cl.: G01N 15/14, G01N 37/00

(54) **MICROPARTICLE FRACTIONATING DEVICE AND MICROPARTICLE FRACTIONATING METHOD**

(30) Priority: 14.03.2022 JP 2022038878
(71) Applicant: Sony Group Corporation, Tokyo 108-0075 (JP)
(72) Inventor: NAKAMURA, Masahiko, Tokyo 108-0075 (JP)
(74) Representative: D Young & Co LLP
(86) International application number: PCT/JP2023/006138
(87) International publication number: WO 2023/176329

(57) **Abstract**

Provided is a microparticle sorting device capable of selectively sorting a microparticle of interest with high efficiency and high purity.

The present technology provides a microparticle sorting device including: a main channel through which a first fluid containing microparticles flows; a recovery channel communicating with the main channel; an actuator that performs a suction operation of sucking the microparticles by generating a negative pressure in the recovery channel, and the suction operation and a discharge operation by generating a pressure change in the recovery channel; and a control unit that applies a drive voltage to the actuator to control a drive interval between the suction operation and the discharge operation performed by the actuator and/or a drive time from the suction operation to the end of the discharge operation performed by the actuator.

## Description

### TECHNICAL FIELD

The present technology relates to a microparticle sorting device and a microparticle sorting method.

### BACKGROUND ART

There is known a microparticle sorting device that forms a sheath flow containing microparticles in a channel, irradiates the microparticles in the sheath flow with light to detect fluorescence and scattered light emitted from the microparticles, and separately recovers a microparticle group (population) exhibiting a predetermined optical characteristic. For example, in a flow cytometer, a plurality of types of cells contained in a sample is labeled with fluorescent dyes, and the fluorescent dye labeled on each cell is optically identified, so that only a specific type of cell is separately recovered.

Patent Documents 1 and 2 each disclose a microchip-type microparticle sorting device that forms a sheath flow in a channel formed in a microchip such as a plastic microchip or a glass microchip and performs analysis.

The microparticle sorting device disclosed in Patent Document 1 is configured to regulate a voltage applied to an actuator to generate a pressure change containing a step waveform component and an undershoot waveform component in a branch channel. This microparticle sorting device can not only introduce, into the branch channel, a fluid having a volume necessary for drawing microparticles but also perform an operation of capturing microparticles into the branch channel with higher throughput.

The microparticle sorting device disclosed in Patent Document 2 is configured to apply, to an actuator, a drive waveform that is any one a pulse waveform, a step waveform, or a step waveform with undershoot and control the application of the pulse waveform separately for a falling waveform section and a rising waveform section. This microparticle sorting device can avoid a return operation before it happens that hinders the capture of the next microparticle to be sorted and thus increase the yield of microparticles to be sorted.

### CITATION LIST

### PATENT DOCUMENT

Patent Document 1: Japanese Patent No. 6172147
Patent Document 2: Japanese Patent No. 6036496

### SUMMARY OF THE INVENTION

### PROBLEMS TO BE SOLVED BY THE INVENTION

For even faster and more accurate analysis, a technique for extracting, with higher throughput and stability, a microparticle of interest from a sheath flow flowing through a channel is required for a microparticle sorting device. The conventional techniques, however, have a problem that when sorting a microparticle, a pulsating flow (also referred to as unwanted oscillation) in which a flow in a suction direction and a flow in a discharge direction opposite to the suction direction are alternately repeated is generated in a channel due to a pressure change caused by a suction operation and a discharge operation of an actuator, which prevents the microparticle of interest from being selectively sorted with high efficiency and high purity. It is therefore a main object of the present technology to provide a microparticle sorting device capable of selectively sorting a microparticle of interest with high efficiency and high purity.

### SOLUTIONS TO PROBLEMS

Therefore, the inventors have found that it is possible to suppress unwanted flow oscillation generated in a channel after a suction operation and a discharge operation performed by an actuator during a microparticle sorting operation by performing the suction operation and the discharge operation at time intervals that cause their respective oscillation characteristics to cancel each other out and sort a microparticle of interest with high efficiency and high purity.

That is, the present technology provides a microparticle sorting device including:
a main channel through which a first fluid containing microparticles flows;
a recovery channel communicating with the main channel;
an actuator that performs a suction operation and a discharge operation by generating a pressure change in the recovery channel; and
a control unit that applies a drive voltage to the actuator to control a drive interval between the suction operation and the discharge operation performed by the actuator and/or a drive time from the suction operation to the end of the discharge operation performed by the actuator.

The suction operation may be performed by generating a negative pressure in the recovery channel.

The actuator may increase a volume of an inner space of the recovery channel.

The control unit may control the drive interval and/or the drive time so as to reduce an amplitude of changes in flow velocity of a pulsating flow that is generated by the suction operation and in which a flow in a suction direction and a flow in a direction opposite to the suction direction are alternately repeated, and/or an amplitude of changes in flow velocity of a pulsating flow that is generated by the discharge operation and in which a flow in a discharge direction and a flow in a direction opposite to the discharge direction are alternately repeated.

The control unit may control the drive interval and/or the drive time so as to cause a peak of changes in flow velocity of a pulsating flow that is generated by the suction operation and in which a flow in a suction direction and a flow in a direction opposite to the suction direction are alternately repeated, and a peak of changes in flow velocity of a pulsating flow that is generated by the discharge operation and in which a flow in a discharge direction and a flow in a direction opposite to the discharge direction are alternately repeated to cancel each other out. The control unit may apply, to the actuator, a drive voltage with a drive waveform including a falling waveform and a rising waveform to perform the suction operation and the discharge operation, so as to make a drive voltage application time of the falling waveform and a drive voltage application time of the rising waveform different from each other.

The control unit may apply, to the actuator, a drive voltage with a drive waveform including a falling waveform and a rising waveform to perform the suction operation and the discharge operation, so as to make a drive voltage application time of the falling waveform and a drive voltage application time of the rising waveform identical to each other.

In the microparticle sorting device according to the present technology, in the recovery channel, a microparticle to be sorted among the microparticles and/or an emulsion in which the first fluid is contained in a second fluid immiscible with the first fluid may be recovered.

Furthermore, the microparticle sorting device according to the present technology may further include an emulsion detection unit that detects the microparticles and/or the emulsion in the recovery channel.

The control unit may automatically control the drive voltage, the drive interval, and the drive time of the actuator on the basis of optical information from the microparticles and/or the emulsion detected by the emulsion detection unit.

In the microparticle sorting device according to the present technology, the main channel may further include a particle detection unit that detects the microparticle to be sorted in the first fluid flowing through the main channel, and
the control unit may control a time from the detection of the microparticle by the particle detection unit to the suction operation on the basis of optical information from the microparticles detected by the emulsion detection unit.

The present technology provides a microparticle sorting method including:
a recovery step of recovering microparticles in a first fluid flowing through a main channel into a recovery channel communicating with the main channel using a negative pressure generated by a suction operation of an actuator, in which in the recovery step, the suction operation and a discharge operation are performed by generating a pressure change in the recovery channel; and
a control step of controlling a drive interval between the suction operation and the discharge operation and/or a drive time from the suction operation to an end of the discharge operation.

### BRIEF DESCRIPTION OF DRAWINGS

Fig. 1 is a diagram for describing a configuration of a microchip mounted on a microparticle sorting device according to the present technology.
Fig. 2 is a diagram schematically illustrating how a sample fluid containing microparticles and a sheath fluid form a laminar flow in a main channel.
Fig. 3 is an enlarged view of a particle sorting section.
Fig. 4 is a block diagram of an example of a control unit.
Fig. 5 is a diagram schematically illustrating the inside of a recovery channel in a case where a microparticle Po to be sorted is sucked into the channel.
Fig. 6 is a plan view of a microchip 150 mounted on a microparticle sorting device 100 according to the present technology, for describing a configuration of the microchip 150.
Fig. 7 is a diagram for describing the configuration of the microchip 150 and a configuration of an actuator mounted on the microparticle sorting device 100 according to the present technology.
Fig. 8 is a cross-sectional view of the microchip 150 mounted on the microparticle sorting device 100 according to the present technology, for describing the configuration of the microchip 150.
Fig. 9 is a diagram for describing a configuration of a branch section between a main channel 155 and a recovery channel 159 in the microchip.
Fig. 10 is a diagram for describing a function of a pressure chamber 165 in the microchip.
Fig. 11 is a diagram for describing a base drive waveform of a piezo drive voltage.
Fig. 12 is a diagram illustrating an analysis result of a simulation regarding changes in volume of the pressure chamber and changes in flow velocity in a connection channel in a case where a suction operation and a discharge operation are separately performed by the actuator.
Fig. 13 is a diagram illustrating an analysis result of a simulation regarding changes in flow velocity in a connection channel 170 in a case where the suction operation and the discharge operation performed by the actuator are controlled at drive intervals that suppress unwanted flow oscillation in the connection channel 170.
Fig. 14 is an image showing generation of an emulsion E in the connection channel 170 in a case where the suction operation and the discharge operation are performed by the actuator at the drive intervals that suppresses unwanted oscillation.
Fig. 15 is a diagram illustrating an analysis result of a simulation regarding changes in flow velocity in the connection channel 170 in a case where a drive voltage application time (falling slope) of a falling waveform and a drive voltage application time (rising slope) of a rising waveform in the drive waveform are identical to each other, and the suction operation and the discharge operation are performed by the actuator at relatively short drive intervals.
Fig. 16 is an image showing generation of an emulsion in the connection channel 170 in a case where the suction operation and the discharge operation are performed by the actuator at relatively short drive intervals.
Fig. 17 is a diagram illustrating a result of a simulation of the flow velocity in the connection channel 170 when the drive voltage application time of the rising waveform is changed to 30 µs, 60 µs, and 120 µs.
Fig. 18 is a diagram illustrating a result of a simulation of the flow velocity in the connection channel 170 in a case where the drive voltage application time of the falling waveform and the drive voltage application time of the rising waveform are different from each other, and the slope of the falling waveform and the slope of the rising waveform are different from each other.
Fig. 19 is a flowchart of a microparticle sorting method according to a second embodiment.
Fig. 20 is a flowchart of a microparticle sorting method according to a third embodiment.
Fig. 21 is a flowchart illustrating details of the microparticle sorting method according to the third embodiment.
Fig. 22 is a diagram illustrating the counted number of emulsions generated in the recovery channel at various drive time intervals Th.
Fig. 23 is a diagram illustrating the counted number of particles recovered into the recovery channel at various recovery start times Td.

### MODE FOR CARRYING OUT THE INVENTION

Hereinafter, preferred modes for carrying out the present technology will be described. Note that embodiments described below are representative embodiments of the present technology, and the scope of the present technology is not limited only to these embodiments. Note that the present technology will be described in the following order.
1. First embodiment (microparticle sorting device)
   (1) Description of first embodiment
   (2) Example of microparticle sorting device
2. Second embodiment (microparticle sorting method)
   (1) Recovery step S1901
   (2) Control step S1902
3. Third embodiment (microparticle sorting method)
   (1) Determination step S2001 of determining first piezo drive height
   (2) Determination step S2002 of determining drive time interval
   (3) Determination step S2003 of determining second piezo drive voltage height
   (4) Determination step S2004 of determining recovery start time

### 1. First embodiment (microparticle sorting device)

### (1) Description of first embodiment

A microparticle sorting device according to the present technology includes: a main channel through which a first fluid containing microparticles flows; a recovery channel communicating with the main channel; an actuator that performs a suction operation and a discharge operation by generating a pressure change in the recovery channel; and a control unit that applies a drive voltage to the actuator to control a drive interval between the suction operation and the discharge operation performed by the actuator and/or a drive time from the suction operation to the end of the discharge operation performed by the actuator.

Hereinafter, first, a configuration example of the microparticle sorting device according to the first embodiment of the present technology will be described.

### (2) Example of microparticle sorting device

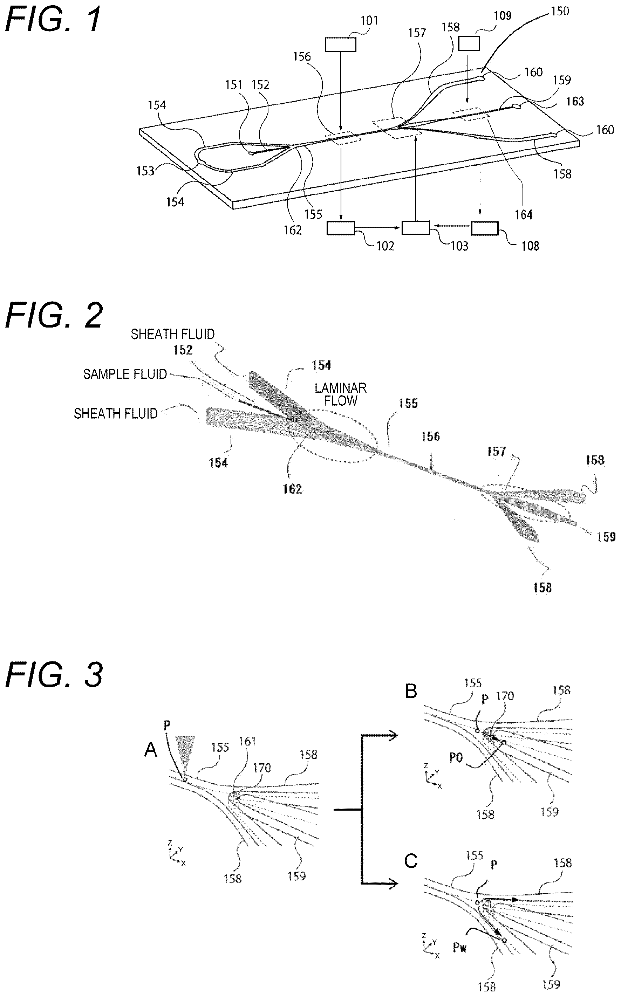

The microparticle sorting device according to the present technology may be configured as a device that sorts a microparticle to be sorted in a closed space, and may be configured as a device that sorts the microparticle to be sorted by controlling a channel through which the microparticles travel, for example. Fig. 1 illustrates a configuration of the microparticle sorting device according to the present technology. Fig. 1 also illustrates an example of a channel structure of a microparticle sorting microchip (hereinafter also referred to as "microchip") attached to the device.

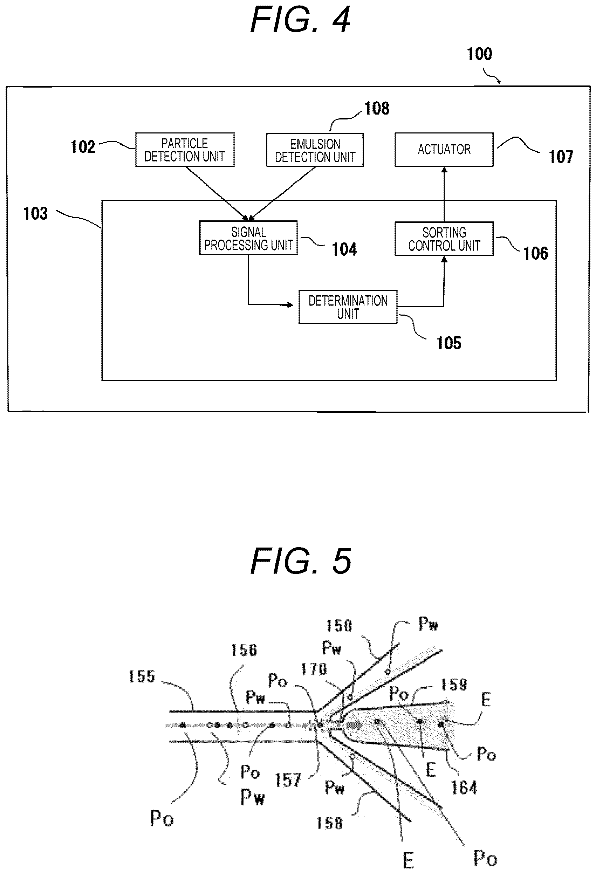

As illustrated in Fig. 1, a microparticle sorting device 100 includes a first light irradiation unit 101, a particle detection unit 102, a second light irradiation unit 109, an actuator 107 (see Fig. 4), an emulsion detection unit 108, and a control unit 103. The microparticle sorting device 100 further includes a microchip 150. The microchip 150 may be detachably attached to the microparticle sorting device 100. As illustrated in Fig. 4, the control unit 103 may include a signal processing unit 104, a determination unit 105, and a sorting control unit 106.

Hereinafter, first, the microparticle sorting microchip 150 will be described, and next, sorting processing performed by the microparticle sorting device 100 will be described together with a description of other components of the device. Note that, in the following drawings, the same reference numerals denote the same components, so that the description of such components will be omitted after the first description.

As illustrated in Fig. 1, the microparticle sorting microchip 150 is provided with a sample fluid inlet 151 and a sheath fluid inlet 153. A sample fluid including a first fluid containing a microparticle to be sorted and a sheath fluid including only the first fluid not containing the microparticle are introduced from these inlets into a sample fluid channel 152 and a sheath fluid channel 154, respectively.

The microparticle sorting microchip 150 has a channel structure in which the sample fluid channel 152 through which the sample fluid flows and the sheath fluid channel 154 through which the sheath fluid flows are joined at a junction 162 to become a main channel 155. As illustrated in Fig. 2, the sample fluid and the sheath fluid join at the junction 162 to form, for example, a laminar flow in which the sample fluid is surrounded by the sheath fluid. Preferably, in the laminar flow, the microparticles are arrayed substantially in a line. As described above, in the present technology, the channel structure forms a laminar flow including the microparticles flowing substantially in a line.

The laminar flow flows through the main channel 155 toward a particle sorting section 157. Preferably, the microparticles flow in a line in the main channel 155. Therefore, when a particle detection region 156 to be described below is irradiated with light, light generated by irradiating one microparticle with light and light generated by irradiating another microparticle with light can be easily distinguished from each other.

The microparticle sorting microchip 150 includes the particle detection region 156. In the particle detection region 156, the first light irradiation unit 101 irradiates a microparticle flowing through the main channel 155 with light, and the particle detection unit 102 detects light generated by the light irradiation. On the basis of characteristics of the light detected by the particle detection unit 102, the determination unit 105 included in the control unit 103 determines whether or not the microparticle is the microparticle to be sorted. For example, the determination unit 105 may make a determination on the basis of scattered light such as forward-scattered light, side-scattered light, or back-scattered light, a determination on the basis of fluorescence having the same or a plurality of wavelengths, or a determination on the basis of an image (for example, a dark field image and/or a bright field image, or the like).

The microparticle sorting microchip 150 illustrated in Fig. 1 includes the main channel 155 through which microparticles flow, a recovery channel 159 in which the microparticle to be sorted among the microparticles is sorted and the microparticle to be sorted and an emulsion are recovered, and a waste channel 158 in which a microparticle not to be sorted is discarded. The microparticle sorting microchip 150 is provided with the particle sorting section 157. An enlarged view of the particle sorting section 157 is illustrated in Fig. 3. As illustrated in Fig. 3A, the particle sorting section 157 includes a connection channel 170 that connects the main channel 155 through which a microparticle P flows and the recovery channel 159. As illustrated in Fig. 3B, among the microparticle P, a microparticle Po to be sorted flows into the recovery channel 159 through the connection channel 170. As illustrated in Fig. 3C, a microparticle Pw not to be sorted flows into the waste channel 158. A fluid supply channel 161 capable of supplying a second fluid immiscible with the first fluid is connected to the connection channel 170 in the vertical direction. As described above, the microparticle sorting microchip 150 has a channel structure including the main channel 155, the waste channel 158, the recovery channel 159, the connection channel 170, and the fluid supply channel 161.

In the particle sorting section 157, the laminar flow flowing through the main channel 155 flows into the waste channel 158. Furthermore, in the particle sorting section 157, only in a case where the microparticle Po to be sorted flows, a flow into the recovery channel 159 is formed, and the microparticle Po is sorted. When the microparticle Po is sucked into the recovery channel 159, the sample fluid forming the laminar flow or the sample fluid and the sheath fluid forming the laminar flow may also flow into the recovery channel 159.

In order to prevent the microparticle Pw not to be sorted from entering the recovery channel 159, the fluid supply channel 161 may be connected to the connection channel 170 as illustrated in Fig. 3A. The second fluid is introduced from the fluid supply channel 161 to the connection channel 170 and flows into both the main channel 155 and the recovery channel 159. A flow is formed from the connection channel 170 toward the main channel 155, which prevents the microparticle Pw not to be sorted from entering the recovery channel 159.

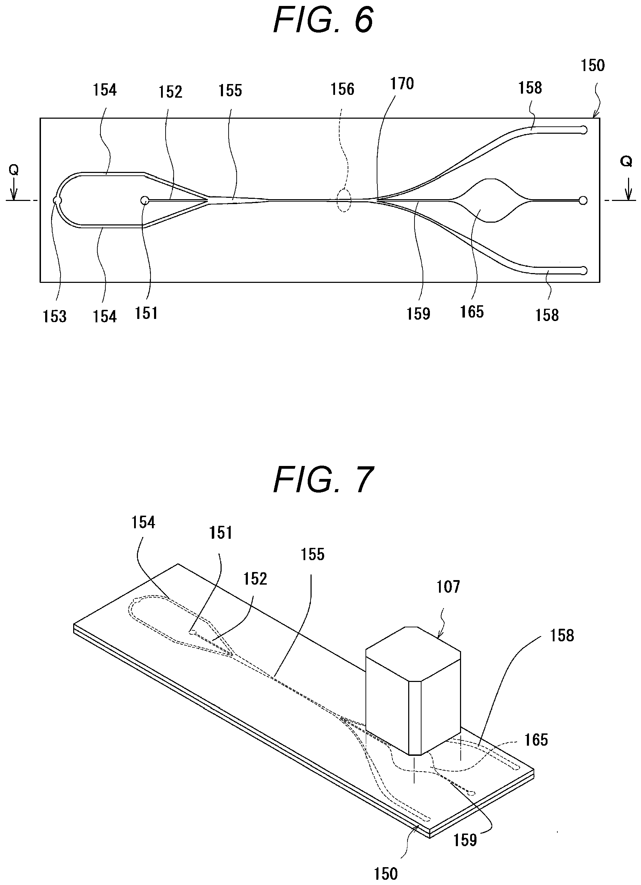

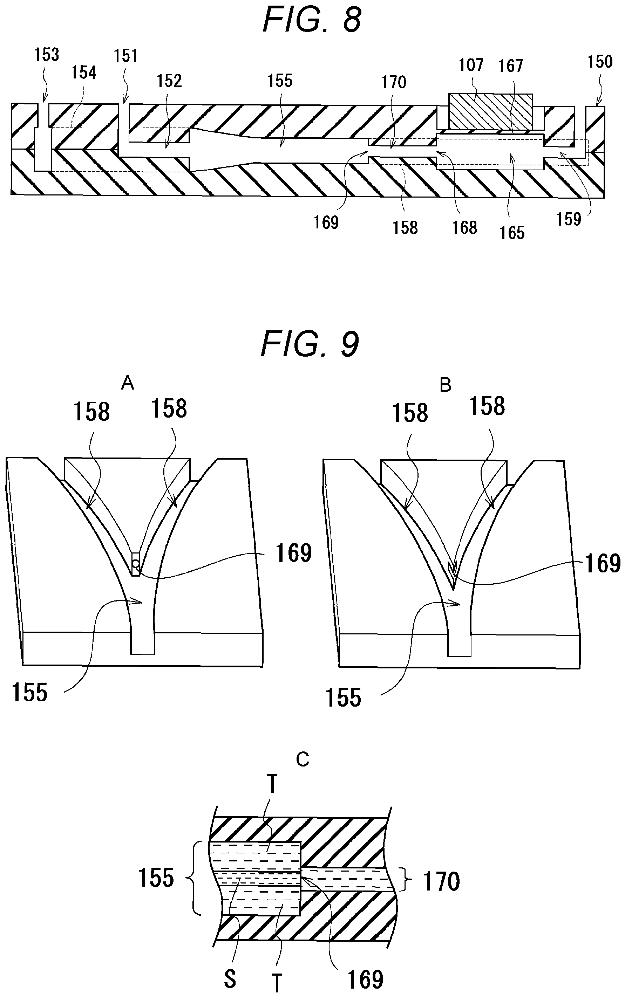

The microparticle sorting device 100 includes the actuator 107 that performs a suction operation and a discharge operation by generating a pressure change in the recovery channel 159. In order to suck the microparticle to be sorted into the recovery channel 159, the actuator 107 generates a negative pressure in the recovery channel 159 to suck the sample fluid containing the microparticle and the sheath fluid into the recovery channel 159. That is, the actuator 107 performs the suction operation of sucking the microparticle by generating a negative pressure in the recovery channel 159. The actuator 107 is a piezoelectric element such as a piezo element. The actuator 107 is arranged in contact with a surface of the microchip 150 and is arranged at a position corresponding to the recovery channel 159. More specifically, the actuator 107 is arranged at a position corresponding to a pressure chamber 165 provided as an inner space obtained by expanding a part of the recovery channel 159 (see Figs. 7 and 8).

The inner space of the pressure chamber 165 is expanded in a planar direction (width direction of the recovery channel 159) as illustrated in Fig. 6 and also expanded in a cross-sectional direction (height direction of the recovery channel 159) as illustrated in Fig. 8. That is, the recovery channel 159 is expanded in the width direction and the height direction in the pressure chamber 165. In other words, the recovery channel 159 is formed so as to make its cross section orthogonal to a flow direction of the sample fluid and the sheath fluid larger in the pressure chamber 165.

The actuator 107 generates an expansion/contraction force along with a change in an applied drive voltage to cause a pressure change in the recovery channel 159 via a surface (contact surface) of the microchip 150. When a flow occurs in the recovery channel 159 along with the pressure change in the recovery channel 159, a volume in the recovery channel 159 changes at the same time. The volume in the recovery channel 159 changes until reaching a volume defined by a displacement amount of the actuator 107 corresponding to the applied drive voltage. More specifically, the actuator 107 presses a displacement plate 167 (see Fig. 8) forming the pressure chamber 165 to keep the volume of the pressure chamber 165 small in an expanded state where the drive voltage applied to the actuator 107. Then, when the applied drive voltage decreases, the actuator 107 generates a force in a direction of contraction to weaken a pressing force on the displacement plate 167, thereby generating a negative pressure in the pressure chamber 165.

In order to efficiently transmit the expansion/contraction force of the actuator 107 into the pressure chamber 165, it is preferable that the surface of the microchip 150 is recessed at a position corresponding to the pressure chamber 165, and the actuator 107 is arranged in the recess as illustrated in Fig. 8. The displacement plate 167 serving as a surface in contact with the actuator 107 can therefore be made as thin as possible, so that the displacement plate 167 can be easily displaced by a change in pressing force caused by the expansion/contraction of the actuator 107 to cause a volume change of the pressure chamber 165.

In order to return, to the original state, the pressure chamber 165 deformed for the sucking of the microparticle to be sorted into the recovery channel 159, the actuator 107 reduces the volume of the pressure chamber 165 by a certain amount to generate a positive pressure. The suction force may be adjusted by means of a drive waveform of the drive voltage applied to the piezo element, or may be adjusted by means of the drive voltage applied to the piezo element. Note that the recovery channel 159 itself may function as a pressure chamber. The pressure in the pressure chamber 165 may be reduced. A suction force is generated by the reduction in the pressure in the pressure chamber 165 to introduce the microparticle Po to be sorted into the recovery channel 159. Furthermore, the pressure in the pressure chamber 165 may be increased. A suction force is generated by the increase of the pressure in the pressure chamber 165 to prevent the microparticle Pw not to be sorted from entering the recovery channel 159. As described above, it is possible to sort, by adjusting the pressure in the pressure chamber 165, only the microparticle Po to be sorted.

In Fig. 9, a port of the connection channel 170 that communicates with the main channel 155 is denoted by a reference numeral 169. The microparticle Po to be sorted, which is fed in a sheath flow formed in the main channel 155, is captured into the recovery channel 159 from the communication port 169 through the connection channel 170.

In order to capture the microparticle Po to be sorted from the main channel 155 into the recovery channel 159 with ease, the communication port 169 is desirably opened at a position corresponding to a sample fluid laminar flow S in the sheath flow formed in the main channel 155 as illustrated in Fig. 9C. The shape of the communication port 169 is not particularly limited, but the communication port 169 may be an opening on a flat surface as illustrated in Fig. 9A or an opening obtained by cutting out channel walls of the two waste channels 158 as illustrated in Fig. 9B.

The microparticle sorting microchip used in the microparticle sorting device according to the present technology may be manufactured by a method known in the technical field. For example, the microparticle sorting microchip can be manufactured by bonding two substrates in which the channels as described in the above 1. are formed. The channels may be formed in both of the two substrates, or may be formed in only one of the substrates. In order to make alignment when bonding the substrates easier, the channels may be formed in only one of the substrates.

Examples of the material for forming the microparticle sorting microchip used in the microparticle sorting device according to the present technology may include materials known in the technical field. The examples include, but are not limited to, for example, polycarbonate, cycloolefin polymer, polypropylene, polydimethylsiloxane (PDMS), polymethylmethacrylate (PMMA), polyethylene, polystyrene, glass, and silicon. Especially, polymer materials such as polycarbonate, cycloolefin polymer, and polypropylene are particularly preferable because they are excellent in processability and allow a microchip to be manufactured using a molding device with less cost.

The microparticle sorting device according to the present technology includes the control unit 103 that controls a sorting condition applied to the particle sorting section 157 on the basis of information regarding light detected by the emulsion detection unit 108. As illustrated in Fig. 4, the control unit 103 may include the signal processing unit 104 to which signals are transmitted, the signals being obtained by converting detected light into an analog electric signal or a digital electric signal by the particle detection unit 102 and/or the emulsion detection unit 108. The sorting control unit 106 may be provided that controls the actuator 107 in a case where the electric signal processed is transmitted from the signal processing unit 104 to the determination unit 105 and the determination unit 105 determines that the microparticle is the microparticle to be sorted in the particle detection unit 102. The sorting control unit 106 can control the suction force by means of a piezo drive voltage and a piezo drive waveform applied to the actuator 107. Furthermore, as the information regarding the light from the emulsion detection unit 108, information regarding the presence or absence of the emulsion is obtained by means of forward-scattered light detection, and information regarding the presence or absence of the microparticle to be sorted in the emulsion is obtained by means of fluorescence detection, side-scattered light detection, and back-scattered light detection. Moreover, the control unit 103 can also adjust, as the sorting condition, a piezo drive height D for controlling the suction force that is the strength of suction in the particle sorting section 102, a drive time interval Th that is a time interval between the suction operation and the discharge operation in the particle sorting section 102, or a recovery start time Td that is a time from the detection of the microparticle in the particle detection unit 102 to the sucking of the microparticle in the particle sorting section 157.

The control unit 103 can change the piezo drive height, detect any one of fluorescence, side-scattered light, or back-scattered light, acquire a signal intensity of the emulsion detected by the emulsion detection unit 108, and determine a piezo drive height at which a signal intensity higher than a predetermined signal intensity threshold at which it is determined that the emulsion is generated is obtained as a piezo drive height D1 at which the emulsion can be generated. The signal intensity may be an area signal, a peak signal, or a width signal.

The control unit 103 can change the drive time interval, detect any one of fluorescence, side-scattered light, or back-scattered light, count the number of emulsions detected by the emulsion detection unit 108, and determine a time at which the counted number is minimized as the drive time interval Th at which unwanted flow oscillation is suppressed.

The control unit 103 can change the piezo drive height, detect any one of fluorescence, side-scattered light, or back-scattered light, acquire the signal intensity of the emulsion detected by the emulsion detection unit 108, and determine, on the basis of a correlation between the signal intensity and the emulsion size, a piezo drive height at which a signal intensity close to a signal intensity that is detected on the basis of a desired emulsion size is obtained as the piezo drive height D at which the desired emulsion size can be acquired.

The control unit 103 can change the recovery start time from the microparticle detection to the suction operation, detect any one of fluorescence, side-scattered light, or back-scattered light, count the number of microparticles in the emulsion detected by the emulsion detection unit 108, and determine a recovery start time at which the counted number is maximized as an optimal recovery start time Td.

The microparticle sorting device 100 according to the present technology may further include, in order to confirm whether or not the microparticle to be sorted has been sorted, an information processing unit (not illustrated) that integrates information regarding the microparticles detected by the particle detection unit 102 and information regarding the microparticles in the emulsion detected by the emulsion detection unit 108.

In the microparticle sorting microchip 150 having such a channel structure, in a case where the microparticle Po to be sorted is sorted, a flow from the main channel 155 into the recovery channel 159 through the connection channel 170 (hereinafter, also referred to as "flow at the time of microparticle sorting") is formed. The flow at the time of microparticle sorting is formed only in a case where the microparticle Po to be sorted is sorted. The pressure in the pressure chamber 165 may be reduced to form the flow at the time of microparticle sorting. The reduction in the pressure forms a flow from the main channel 155 toward the recovery channel 159, the flow being stronger than the flow from the connection channel 170 toward the main channel 155 generated by the flow of the second fluid from the fluid supply channel 161, and as a result, the microparticle Po to be sorted is sorted into the recovery channel 159.

Making the pressure in the recovery channel 159 negative may form the flow at the time of microparticle sorting. That is, making the pressure in the recovery channel 159 negative causes the microparticle Po to be sorted to be sucked into the recovery channel 159. The sucking of the microparticle Po is performed at a time point when a predetermined time has elapsed since the microparticle passed through the particle detection region 156 in a case where the determination unit 105 included in the control unit 103 determines that the microparticle should be sorted on the basis of the light detected by the particle detection unit 102 in the particle detection region 156. In order to perform microparticle sorting with higher accuracy, it is necessary to optimize a time elapsed before the time point when the suction should be performed. That is, it is necessary to optimize the recovery start time, which is the time from the detection of the microparticle in the particle detection unit 102 to the sucking of the microparticle in the particle sorting section 157. In the connection channel 170 included in the particle sorting section 157, the first fluid is contained in the second fluid, and an emulsion containing the microparticle and an emulsion not containing the microparticle are generated.

In a case where the microparticle Po to be sorted is sucked into the recovery channel 159, together with the microparticle Po, the sample fluid including the first fluid containing the microparticle Po and/or the sheath fluid including only the first fluid not containing the microparticle Po are sucked into the recovery channel 159. A suction force above a certain level is required for generating the emulsion. The size of the emulsion varies in a manner that depends on the suction force, and in a case where the applied suction force is too large, an amount of the sample fluid and/or the sheath fluid sucked into the recovery channel 159 together with the microparticle Po increases, and a density of the microparticle Po to be sorted decreases, which is not preferable. Furthermore, in a case where the suction force is too large, the emulsion is split, and a plurality of emulsions is generated by one suction, which is not preferable. On the other hand, in a case where the applied suction force is too small, a possibility that the microparticle Po to be sorted is not sorted increases. Therefore, it is desirable to optimize the applied suction force, too.

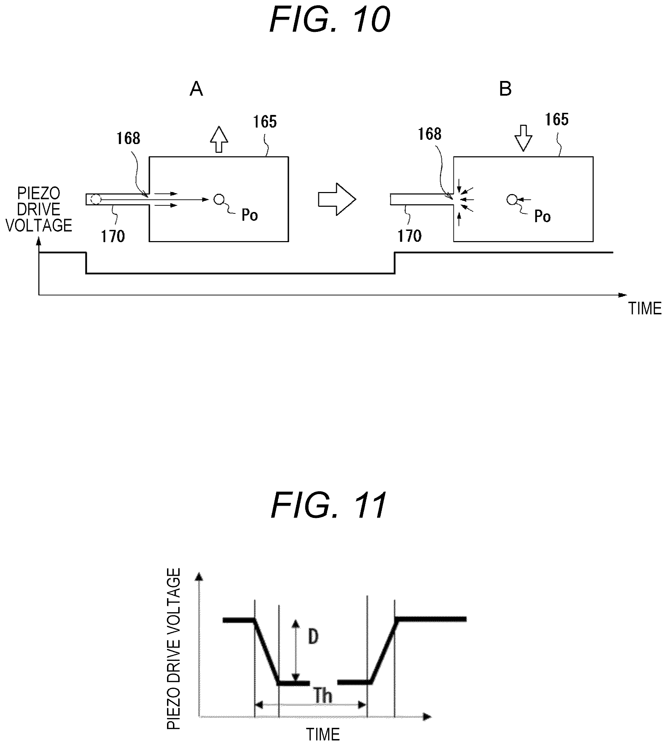

The microparticle Po to be sorted sucked into the connection channel 170 is captured into the pressure chamber 165 as illustrated in Fig. 10A. In the drawing, a reference numeral 168 denotes an intake port of the pressure chamber 165 through which the microparticle Po to be sorted is drawn into the pressure chamber 165. The flow of the sample fluid containing the microparticle Po and the sheath fluid become a jet flow (jet) when flowing into the pressure chamber 165 whose inner space has been expanded, and is separated away from a channel wall surface (see an arrow in Fig. 10A). Therefore, the microparticle Po travels away from the intake port 168 to a back part of the pressure chamber 165.

In order to draw the microparticle Po to be sorted from the main channel 155 into the pressure chamber 165, the amount of increase in the volume of the inner space of the pressure chamber 165 is set larger than the volume (see Fig. 8) of the connection channel 170 extending from the communication port 169 to an inlet port 168. Furthermore, the amount of increase in the volume of the pressure chamber 165 is set large enough to generate a negative pressure sufficient for separating the flow of the sample fluid containing the microparticle Po to be sorted and the sheath fluid away from the channel wall surface at the intake port 168. The control unit 103 outputs, to the actuator 107, a piezo contraction signal having a voltage width corresponding to the amount of increase in the volume.

As described above, the microparticle Po to be sorted is captured into the back part of the pressure chamber 165 whose inner space has been expanded in the recovery channel 159, so that it is possible to prevent the microparticle Po from flowing out from the pressure chamber 165 toward the main channel 155 again even in a case where the pressure in the recovery channel 159 is reversed to a positive pressure. That is, as illustrated in Fig. 10B, even in a case where the inside of the recovery channel 159 has a positive pressure, the sample fluid and the sheath fluid flow out widely from the vicinity of the intake port 168, so that an amount of travel of the microparticle Po captured into a position away from the intake port 168 becomes small. Therefore, the microparticle Po is held in the pressure chamber 165 without flowing out again.

A base drive waveform of the piezo drive voltage applied to the actuator 107 will be described with reference to Fig. 11. The drive waveform includes a falling waveform (falling slope) and a rising waveform (rising slope). The falling waveform is applied to deform the pressure chamber 165 for the suction operation to generate a negative pressure. The rising waveform is applied to return the pressure chamber 165 deformed for the suction operation to the original state for the discharge operation. At this time, when the piezo drive voltage of the rising waveform is applied, the volume of the pressure chamber 165 is reduced, so that a positive pressure is generated. In the drive waveform, the piezo drive height D (voltage), a drive voltage application time (falling slope) of the falling waveform, a drive voltage application time (rising slope) of the rising waveform, and a time interval (drive time interval Th) between the falling waveform and the rising waveform are used as control parameters.

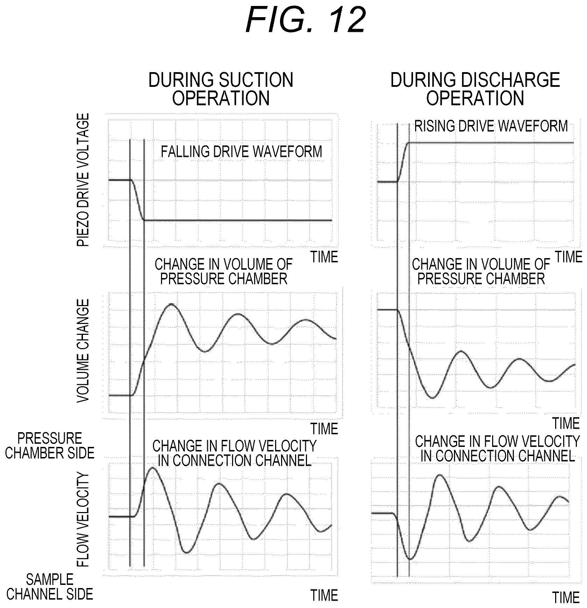

Fig. 12 is a diagram illustrating an analysis result of a simulation regarding changes in the volume of the pressure chamber 165 and changes in flow velocity in the connection channel 170 in a case where plastic is used as the material of the microchip and the suction operation and the discharge operation are separately performed by the actuator 107. As illustrated in Fig. 12, in the suction operation, when the drive voltage of the falling waveform is applied, the pressure chamber 165 is deformed to increase its volume, and the flow in the connection channel 170 is accelerated toward the pressure chamber 165. At this time, an inner wall surface of the channel is elastically deformed by a pressure change caused by the fluid suction and suffers elastic vibration accordingly. This elastic vibration causes a change in the volume of the pressure chamber 165 and causes pressure oscillation in the pressure chamber 165. This pressure oscillation causes a pulsating flow (unwanted oscillation) in which a flow in a suction direction (hereinafter, also referred to as negative direction) toward the recovery channel 159 and a flow in a discharge direction (hereinafter, also referred to as positive direction) opposite to the suction direction are alternately repeated in the connection channel 170.

As illustrated in Fig. 12, in the discharge operation, when the drive voltage of the rising waveform is applied, the pressure chamber 165 is deformed to reduce its volume, and the flow in the connection channel 170 is accelerated in the discharge direction that is a direction away from the pressure chamber 165. The discharge operation also causes the inner wall surface of the channel to suffer elastic vibration, and a pulsating flow (unwanted oscillation) occurs in the connection channel 170 accordingly. Note that oscillation characteristics of the pulsating flow (unwanted oscillation) during the discharge operation are opposite to oscillation characteristics of the pulsating flow (unwanted oscillation) during the suction operation.

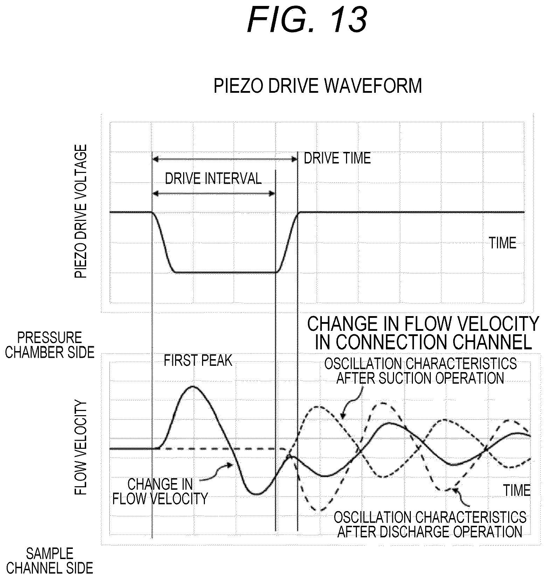

Fig. 13 is a diagram illustrating an analysis result of a simulation regarding changes in flow velocity in the connection channel 170 in a case where the drive voltage application time (falling slope) of the falling waveform and the drive voltage application time (rising slope) of the rising waveform in the drive waveform are identical to each other, and the suction operation and the discharge operation performed by the actuator 107 are controlled on the basis of the drive interval and/or the drive time that suppresses unwanted flow oscillation in the connection channel 170 (drive waveform: falling time (30 µs) - rising time (30 µs) - drive interval (150 µs)). Note that the drive interval refers to a time between the suction operation and the discharge operation performed by the actuator 107. The control unit 103 controls the drive interval and/or the drive time so as to reduce an amplitude of changes in flow velocity of a pulsating flow that is generated by the suction operation and in which the flow in the suction direction and the flow in the direction opposite to the suction direction are alternately repeated, and/or an amplitude of changes in flow velocity of a pulsating flow that is generated by the discharge operation and in which the flow in the discharge direction and the flow in the direction opposite to the discharge direction are alternately repeated. Furthermore, the control unit 103 controls the drive interval and/or the drive time so as to cause a peak of changes in flow velocity of the pulsating flow that is generated by the suction operation and in which the flow in the suction direction and the flow in the direction opposite to the suction direction are alternately repeated and a peak of changes in flow velocity of the pulsating flow that is generated by the discharge operation and in which the flow in the discharge direction and the flow in the direction opposite to the discharge direction are alternately repeated to cancel each other out. As illustrated in Fig. 13, under this drive condition, oscillation characteristics after the suction operation and oscillation characteristics after the discharge operation overlap each other in opposite phase, so that their respective oscillation characteristics cancel each other out, and the amplitude of changes in flow velocity after a first peak becomes smaller. That is, this drive condition can suppress the generation of unwanted flow oscillation in the connection channel 170. It is possible to shorten, by suppressing unwanted oscillation as described above, the drive interval between the suction operation and the discharge operation, which allows highly efficient recovery.

It is possible to suppress, by adjusting the drive interval between the suction operation and the discharge operation to an appropriate time interval, the generation of unwanted flow oscillation in the connection channel 170 and shorten a time interval between a sorting operation of sorting the microparticle Po to be sorted and a sorting operation of sorting the next microparticle Po to be sorted, which allows highly efficient sorting. Furthermore, it is possible to prevent, by suppressing unwanted oscillation, the microparticle Pw not to be sorted from being sucked due to unwanted oscillation and sort the microparticle Po to be sorted with high purity.

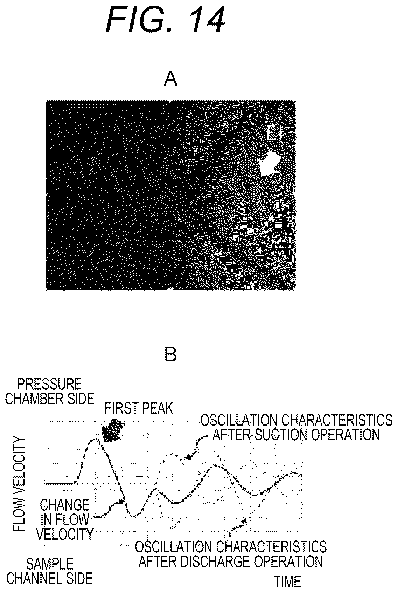

Fig. 14A is an image showing generation of an emulsion E1 in the connection channel 170 in a case where the suction operation and the discharge operation are performed by the actuator 107 at the drive intervals that suppress unwanted oscillation. The emulsion E1 corresponding to the first peak of changes in flow velocity illustrated in Fig. 14B is generated at a position indicated by a white arrow in Fig. 14A. Note that the emulsion E1 contains the microparticle Po to be sorted (not illustrated). Fig. 14B is a diagram illustrating changes in flow velocity in the connection channel 170 in a case where the suction operation and the discharge operation are performed by the actuator at the drive intervals that suppress unwanted oscillation. As illustrated in Figs. 14A and 14B, since there is no plurality of peaks resulting from unwanted oscillation, it is possible to generate one emulsion E1 containing the microparticle Po to be sorted by one suction operation, and it is therefore possible to generate the emulsion E1 containing the microparticle Po to be sorted with high purity and make the emulsion size uniform. Furthermore, in this case, it is possible to suppress generation of an unwanted emulsion Pw.

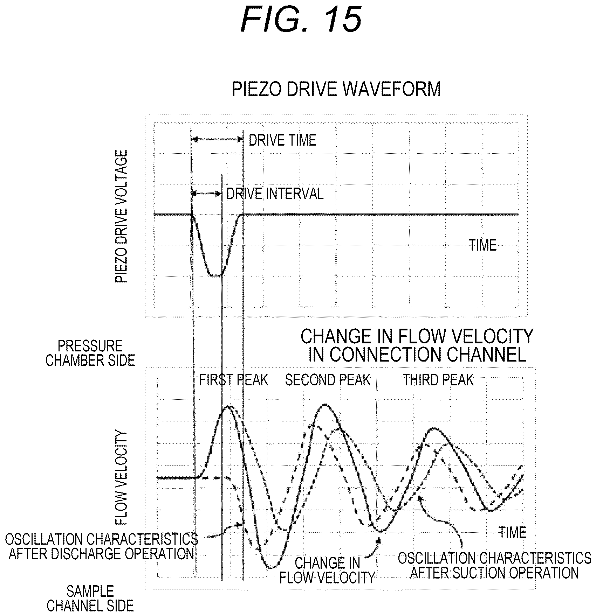

Fig. 15 is a diagram illustrating an analysis result of a simulation regarding changes in flow velocity in the connection channel 170 in a case where the drive voltage application time (falling slope) of the falling waveform and the drive voltage application time (rising slope) of the rising waveform in the drive waveform are identical to each other, and the suction operation and the discharge operation are performed by the actuator 107 at relatively short drive intervals as disclosed in Patent Document 1 (drive waveform: falling time (30 µs) - rising time (30 µs) - drive interval (40 µs)). As illustrated in Fig. 15, under this drive condition, the flow velocity in the connection channel 170 significantly pulsates. Oscillation characteristics after the suction operation and oscillation characteristics after the discharge operation overlap each other in almost the same phase, so that their respective oscillation characteristics enhance each other, the amplitude of changes in flow velocity increases, and a second peak and a third peak result from unwanted oscillation. That is, under the conventional drive condition, unwanted flow oscillation in the connection channel 170 becomes large. Under the conventional drive condition, the larger the diameter of the connection channel 170, the larger the unwanted oscillation in the connection channel 170. In order to suck, after sucking the microparticle Po to be sorted, the next microparticle Po to be sorted, it is necessary that unwanted oscillation of the flow velocity in the connection channel 170 converges to a state before the suction operation, and a waiting time until the unwanted oscillation converges is required, which prevents highly efficient suction. Furthermore, in a case where the unwanted oscillation of the flow velocity in the connection channel 170 is large, there is a possibility that a microparticle is sucked even at the second peak and the third peak, which causes the microparticle Pw not to be sorted to be sucked and thus decreases the purity of the microparticle Po to be sorted.

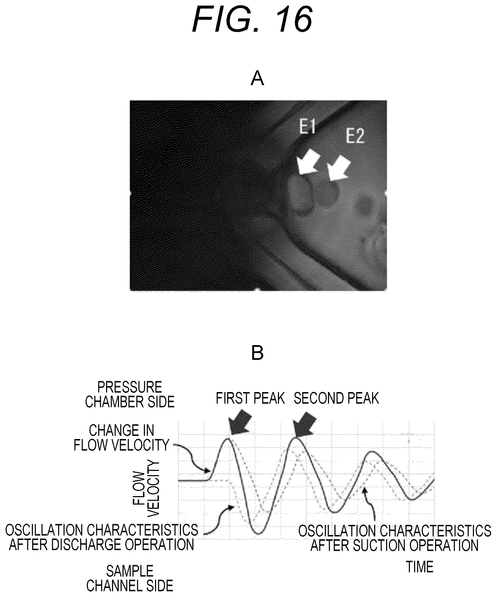

Fig. 16A is an image showing generation of an emulsion E1 and an emulsion E2 in the connection channel 170 in a case where the suction operation and the discharge operation are performed by the actuator 107 at relatively short drive intervals. The emulsion E1 and the emulsion E2 corresponding to the first peak and the second peak of changes in flow velocity illustrated in Fig. 16B, respectively, are generated at positions indicated by white arrows in Fig. 16A. Fig. 16B is a diagram illustrating changes in flow velocity in a case where the suction operation and the discharge operation are performed by the actuator 107 at relatively short drive intervals. As illustrated in Figs. 16A and 16B, a plurality of peaks results from unwanted oscillation, and the plurality of emulsions E1 and E2 having different sizes is generated by one suction operation. In this case, when the microparticle Pw not to be sorted reach the communication port 169 of the connection channel 170 at the timing of the second peak, the emulsion E2 containing the microparticle Pw not to be sorted is generated.

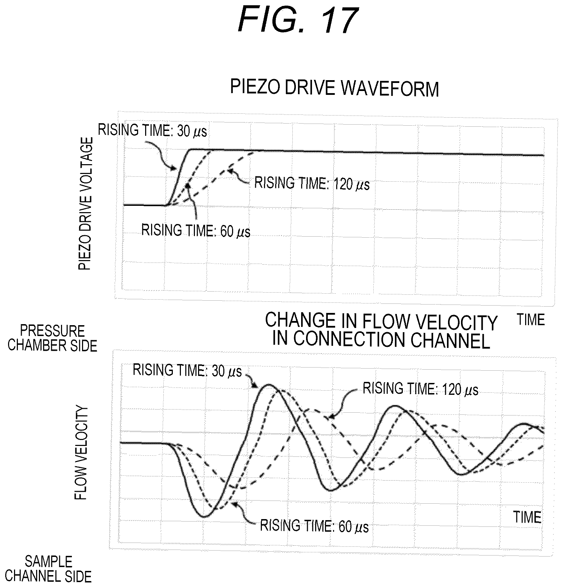

In order to suppress generation of unwanted flow oscillation in the connection channel 170, the drive voltage application time (falling slope) of the falling waveform and the drive voltage application time (rising slope) of the rising waveform in the drive waveform may be different from each other. Fig. 17 is a diagram illustrating a result of a simulation of the flow velocity in the connection channel 170 when the drive voltage application time of the rising waveform is changed to 30 µs, 60 µs, and 120 µs.

As illustrated in Fig. 17, in a case where the drive voltage application time of the rising waveform is set to 120 µs, unwanted oscillation after the sorting operation is small as compared with a case where the drive voltage application time of the rising waveform is set to 30 µs or 60 us. That is, when the drive voltage application time of the rising waveform is made longer to decrease the slope of the rising waveform, unwanted oscillation is suppressed.

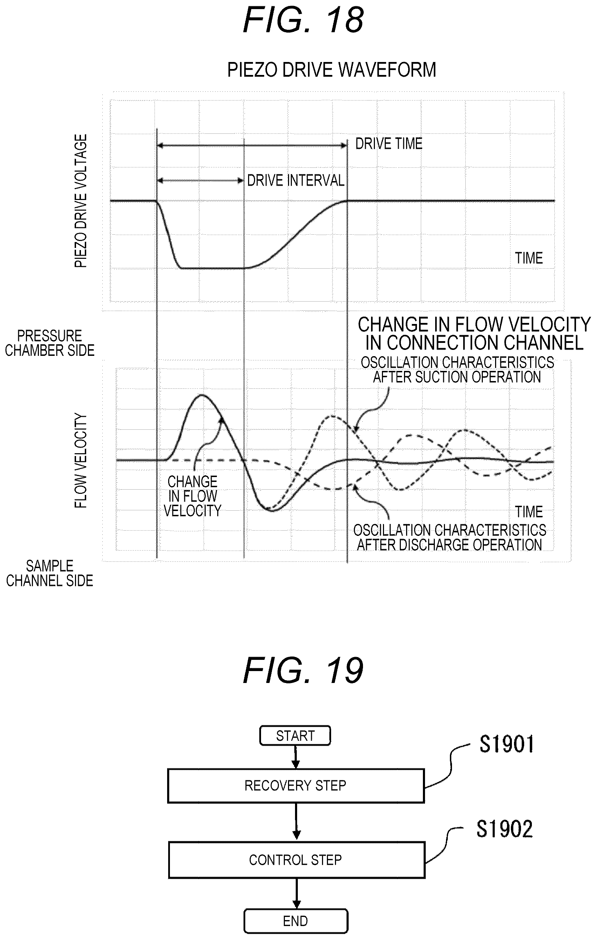

Fig. 18 illustrates a result of a simulation of the flow velocity in the connection channel 170 in a case where the drive voltage application time of the falling waveform and the drive voltage application time of the rising waveform are different from each other, and the slope of the falling waveform and the slope of the rising waveform are different from each other (drive waveform: falling time (30 µs) - rising time (120 µs) - drive interval (100 µs)). In this case, unwanted oscillation after the sorting operation can be reduced as compared with a case where the drive voltage application time (falling slope) of the falling waveform and the drive voltage application time (rising slope) of the rising waveform in the drive waveform are identical to each other as illustrated in Fig. 13. That is, from the viewpoint of achieving an effect of further suppressing unwanted oscillation, it is preferable that the drive voltage application time of the falling waveform of the drive voltage for controlling the actuator 107 be different from the drive voltage application time of the rising waveform.

The microparticle sorting microchip 150 has an emulsion detection region 164 located downstream of the particle sorting section 157. In the emulsion detection region 164, the second light irradiation unit 109 irradiates the emulsion flowing through the recovery channel 159 with light, and the emulsion detection unit 108 detects light generated by the light irradiation. Note that in a case of detection only with forward-scattered light, the presence or absence of the emulsion and the size of the emulsion can be detected, but the microparticle contained in the emulsion causes scattered light to occur on the surface of the emulsion, which prevents the emulsion containing the microparticle and the emulsion not containing the microparticle from being distinguished from each other. In order to detect the microparticle Po to be sorted in the emulsion, to detect a type (for example, a cell type) of the microparticle, and to detect the state (for example, life or death of a cell) of the microparticle, the emulsion detection unit 108 may preferably use a combination of forward-scattered light detection and fluorescence detection, a combination of forward-scattered light detection and side-scattered light detection, a combination of forward-scattered light detection and back-scattered light detection, a combination of forward-scattered light detection, side-scattered light detection, and the fluorescence detection, or a combination of forward-scattered light detection, back-scattered light detection, and the fluorescence detection. Note that the fluorescence may have the same wavelength or a plurality of wavelengths. On the basis of characteristics of the light detected by the emulsion detection unit 108, the determination unit 105 included in the control unit 103 determines whether or not the microparticle Po to be sorted is contained in the emulsion. For example, the determination unit 105 may make the determination on the basis of the detection combinations.

Hereinafter, a light irradiation unit, a particle detection unit, and an emulsion detection unit in the microparticle sorting device according to the present technology will be described.

The microparticle sorting device according to the present technology includes the first light irradiation unit 101 and the second light irradiation unit 109 as the light irradiation unit. The first light irradiation unit 101 irradiates microparticles flowing through the main channel 155 with fluorescent excitation light for detection of the microparticle in the sample fluid channel 152. The second light irradiation unit 109 irradiates the emulsion E flowing through the recovery channel 159 with fluorescent excitation light for detection of the microparticle Po to be sorted in the recovery channel 159.

The first light irradiation unit 101 and the second light irradiation unit 109 irradiate, with light (for example, excitation light), the microparticles flowing in the channels in the microparticle sorting microchip 150. The light irradiation unit may include a light source that emits light, and an objective lens that concentrates the excitation light onto the microparticle flowing through the detection area. The light source may be appropriately selected by one skilled in the art according to the purpose of an analysis, and may be, for example, a laser diode, an SHG laser, a solid-state laser, a gas laser, a high brightness LED, or a halogen lamp, or may be a combination of two or more of them. The light irradiation unit may include another optical element, as needed, in addition to the light source and the objective lens. A numerical aperture (NA) of the objective lens may be preferably 0.1 to 1.5, more preferably 0.5 to 1.0. Furthermore, the light irradiation position may be within a field of view of these objective lenses, or preferably, both the light irradiation position and a branch portion may be within the field of view.

The particle detection unit 102 may detect scattered light and fluorescence generated as a result of causing the first light irradiation unit 101 to irradiate the microparticle with light. The determination unit 105 included in the control unit 103 may determine whether or not the microparticle should be sucked (sorted) on the basis of the detected scattered light and fluorescence. Furthermore, the control unit 103 may detect the passage of the microparticle through the predetermined position on the basis of the detected scattered light and fluorescence. Furthermore, the control unit 103 may calculate a passing velocity of the microparticle on the basis of the detected scattered light and fluorescence.

In the emulsion detection unit 108, at least one of the different optical detection systems can detect scattered light. The scattered light may be any one of forward-scattered light, back-scattered light, or side-scattered light. Furthermore, in the emulsion detection unit 108, at least one of the different optical detection systems may detect fluorescence. The fluorescence detected may have the same wavelength or a plurality of wavelengths.

The emulsion detection unit 108 may detect information regarding the presence or absence of the emulsion, the shape of the emulsion, the number of emulsions, and the like on the basis of the forward-scattered light, and the emulsion detection unit 108 may detect information regarding the presence or absence of the microparticle in the emulsion, the shape of the emulsion, the number of emulsions, and the like on the basis of the fluorescence, the back-scattered light, or the side-scattered light. Hereinafter, the detection in the emulsion detection unit 108 will be described in more detail.

The emulsion detection unit 108 may detect scattered light and fluorescence generated as a result of causing the second light irradiation unit 109 to irradiate the microparticle with light. The emulsion detection unit 108 may detect a combination of forward-scattered light detection and fluorescence detection, a combination of forward-scattered light detection and side-scattered light detection, a combination of forward-scattered light detection and back-scattered light detection, a combination of forward-scattered light detection, side-scattered light detection, and fluorescence detection, and a combination of forward-scattered light detection, back-scattered light detection, and fluorescence detection. The emulsion detection unit 108 detects an emulsion using forward-scattered light and a sorted microparticle using fluorescence, for example. Note that, in a case where only the sorted microparticles are counted (only optimization of a sorting time (suction start time) is performed), the scattered light detection system need not be provided. In the forward-scattered light detection, the emulsion size can be detected, and in the side-scattered light detection or the back-scattered light detection, the microparticle in the emulsion can be detected by detection of the scattered light generated in the emulsion.

The particle detection unit 102 and the emulsion detection unit 108 detect scattered light and/or fluorescence generated from the microparticle as a result of causing the first light irradiation unit 101 and the second light irradiation unit 109 to irradiate the microparticle with light. The particle detection unit 102 and the emulsion detection unit 108 may include a condenser lens that condenses the fluorescence and/or the scattered light generated from the microparticle and a detector. Examples of the detector include, but not limited to, a PMT, a photodiode, a CCD, a CMOS, and the like. The particle detection unit 102 and the emulsion detection unit 108 may include another optical element, as needed, in addition to the condenser lens and the detector. The particle detection unit 102 and the emulsion detection unit 108 may further include, for example, a spectroscopic unit. Examples of optical components that form the spectroscopic unit include a grating, a prism, and an optical filter, for example. The spectroscopic unit can detect, for example, light having a wavelength to be detected separately from light having other wavelengths. The particle detection unit 102 and the emulsion detection unit 108 can convert the detected light into an analog electric signal by photoelectric conversion. The particle detection unit 102 and the emulsion detection unit 108 can further convert the analog electric signal into a digital electric signal by AD conversion.

The sorting operation of the microparticle sorting device according to the present technology forms an emulsion containing the second fluid as a dispersion medium and the first fluid as a dispersoid in the connection channel 170. Fig. 5 is a diagram schematically illustrating the inside of each channel in a case where microparticle Po to be sorted is sucked into the recovery channel 159. In Fig. 5, a reference numeral Po denotes a microparticle to be sorted, a reference numeral Pw denotes a microparticle not to be sorted, and a reference numeral E denotes an emulsion.

The kinematic viscosity of the first fluid and the kinematic viscosity the second fluid at 25°C may be preferably 0.3 cSt to 5 cSt, more preferably 0.4 cSt to 4 cSt, and still more preferably 0.5 cSt to 3 cSt, for example. The kinematic viscosity of the second fluid is preferably 1/1000 to 1000 times, more preferably 1/100 to 100 times, still more preferably 1/10 to 10 times, still more preferably 1/5 to 5 times, and particularly preferably 1/2 to 2 times the kinematic viscosity of the first fluid. In the present technology, it is preferable that the kinematic viscosity of the first fluid and the kinematic viscosity of the second fluid are substantially the same. This makes it easy to form the emulsion.

The density of the first fluid and the density of the second fluid at 25°C both may be preferably 0.5 g/cm³ to 5 g/cm³, more preferably 0.6 g/cm³ to 4 g/cm³, and still more preferably 0.7 g/cm³ to 3 g/cm³, for example.

Furthermore, the density of the second fluid is preferably 1/100 to 100 times, more preferably 1/10 to 10 times, still more preferably 1/5 to 5 times, and particularly preferably 1/2 to 2 times the density of the first fluid. In the present technology, it is preferable that the density of the first fluid and the density of the second fluid are substantially the same. This makes it easy to form the emulsion.

The first fluid and the second fluid have the above physical properties, so that the emulsion is easily formed in the particle sorting section 157. Furthermore, such physical properties allow these fluids to easily flow in a microchannel.

In one implementation of the present technology, the first fluid may be a hydrophilic fluid, and the second fluid may be a hydrophobic fluid. In this implementation, an emulsion containing the hydrophobic fluid as a dispersion medium and the hydrophilic fluid as a dispersoid may be formed in the particle sorting section 157. For example, it is desirable that a biological particle such as a cell be present in a state of being contained in the hydrophilic fluid such as a buffer or a culture solution. This implementation is therefore suitable for recovering microparticles, particularly biological particles, more particularly cells, which are desired to be present in the hydrophilic fluid.

The hydrophilic fluid contains, for example, water and a fluid miscible with water. For example, the hydrophilic fluid may be a fluid containing, as a main component, one or a mixture of two or more selected from the group consisting of water, a hydrophilic alcohol, a hydrophilic ether, ketone, a nitrile-based solvent, dimethyl sulfoxide, and N,N-dimethylformamide. In the present specification, the main component refers to a component that accounts for, for example, 50 mass% or more, particularly 60 mass% or more, more particularly 70 mass% or more, and still more particularly 80 mass% or more, 85 mass% or more, or 90 mass% or more of the fluid. Examples of the hydrophilic alcohol include ethanol, methanol, propanol, and glycerin. Examples of the hydrophilic ether include tetrahydrofuran, polyethylene oxide, and 1,4-dioxane. Examples of the ketone include acetone and methyl ethyl ketone. Examples of the nitrile-based solvent include acetonitrile.

The hydrophilic fluid may be preferably a fluid containing water as a main component, and may be, for example, water, an aqueous solution, or an aqueous dispersion. The hydrophilic fluid may be, for example, the sheath fluid and/or the sample fluid. The hydrophilic fluid is preferably a hydrophilic fluid that does not adversely affect microparticles (for example, biological particles, particularly, cells).

The hydrophilic fluid may be, for example, a fluid containing a biomolecule. The biomolecule may be, for example, one or a combination of two or more selected from amino acids, peptides, and proteins.

Furthermore, the hydrophilic fluid may contain, for example, a surfactant, particularly a nonionic surfactant. Examples of the nonionic surfactant include a triblock copolymer of polyethylene oxide and polypropylene oxide, and the triblock copolymer is also referred to as poloxamer or Pluronic (registered trademark)-based surfactant. A more specific example of the Pluronic (registered trademark)-based surfactant is Pluronic (trademark) F68.

Examples of the hydrophilic fluid include, but are not limited to, a culture solution and a buffer. The buffer is preferably Good's buffer.

When the culture solution is used as the hydrophilic fluid, a cell sorted as the microparticle to be sorted can be cultured while being held in emulsion particles.

Furthermore, when the hydrophilic fluid (particularly, the sheath fluid) contains a cell stimulating component, the cell sorted as the microparticle to be sorted can be stimulated while being held in the emulsion particles. Moreover, characteristics (for example, morphology, and the like) of the stimulated cell can also be observed under a microscope or the like.

Furthermore, the hydrophilic fluid (for example, the sheath fluid or the sample fluid) may include an assay system that enables observation of a response of cell stimulation. The use of the assay system allows the response from the cell sorted as the microparticle to be sorted to be detected, for example, optically while being held in the emulsion particles. The assay system is preferably a wash-free assay system, and for example, a system using fluorescence resonance energy transfer (FRET), bioluminescence resonance energy transfer (BRET), or the like is preferable.

As described above, in the present technology, in a case where the microparticle is a biological particle (particularly, a cell), it is possible to perform various analyses of a single biological particle (particularly, single cell analysis, for example, single cell imaging or the like).

The density of the hydrophilic fluid at 25°C may be preferably 0.5 g/cm³ to 5 g/cm³, more preferably 0.6 g/cm³ to 4 g/cm³, and still more preferably 0.7 g/cm³ to 3 g/cm3, for example.

The kinematic viscosity of the hydrophilic fluid at 25°C may be preferably 0.3 cSt to 5 cSt, more preferably 0.4 cSt to 4 cSt, and still more preferably 0.5 cSt to 3 cSt, for example.

The hydrophilic fluid has the above physical properties, so that the hydrophilic fluid easily flows in a microchannel, and an emulsion is easily formed in the particle sorting section 157.

The hydrophobic fluid may be any fluid selected from fluids that are immiscible with the hydrophilic fluid. The hydrophobic fluid may be, for example, a fluid containing, as a main component, one or a mixture of two or more selected from the group consisting of an aliphatic hydrocarbon, a fluorine-based oil, a low molecule or polymer containing a fluorine atom, a silicone oil, an aromatic hydrocarbon, an aliphatic monohydric alcohol (for example, n-octanol or the like), and a fluorinated polysaccharide.

The aliphatic hydrocarbon is preferably an aliphatic hydrocarbon having carbon atoms ranging from 7 to 30 inclusive. The number of carbon atoms is in a range of 7 to 30 inclusive, so that the kinematic viscosity of the hydrophobic fluid is suitable for flowing in the microchannel. Examples of the aliphatic hydrocarbon include mineral oils; for example, oil derived from animals and plants such as squalane oil and olive oil; for example, a paraffinic hydrocarbon having 10 to 20 carbon atoms such as decane and hexadecane; and an olefin-based hydrocarbon having 10 to 20 carbon atoms.

In the present technology, from the viewpoint of good immiscibility with the hydrophilic fluid, the hydrophobic fluid is preferably a fluorine-based oil. Examples of the fluorine-based oil include perfluorocarbon (PFC), perfluoropolyether (PFPE), and hydrofluoroether (HFE). Examples of the perfluorocarbon include Fluorinert (trademark) FC40 and Fluorinert FC-770 (manufactured by 3M Company). Examples of the perfluoropolyether include Krytox (manufactured by DuPont). Examples of the hydrofluoroether include HFE7500 (manufactured by 3M Company).

The density of the hydrophobic fluid at 25°C may be preferably 0.5 g/cm³ to 5 g/cm³, more preferably 0.6 g/cm³ to 4 g/cm³, and still more preferably 0.7 g/cm³ to 3 g/cm³, for example.

The kinematic viscosity of the hydrophobic fluid at 25°C may be preferably 0.3 cSt to 5 cSt, more preferably 0.4 cSt to 4 cSt, and still more preferably 0.5 cSt to 3 cSt, for example.

The hydrophobic fluid has the above physical properties, so that an emulsion is easily formed in the particle sorting section 157. For example, in a case where the density or the kinematic viscosity is too high, a possibility that the fluid does not flow smoothly in the connection channel 170 increases.

In a preferred implementation of the present technology, either or both of the first fluid and the second fluid may contain a surfactant. In particular, either or both of the hydrophobic fluid and the hydrophilic fluid contain a surfactant, more particularly the hydrophobic fluid contains a surfactant. The surfactant allows emulsion particles to be not only formed easily but also maintained stably. Examples of the surfactant include a nonionic surfactant and a fluorine-based surfactant. Examples of the nonionic surfactant include, but are not limited to, Span80 and Abil EM. A type of the surfactant may be selected as appropriate by one skilled in the art. Examples of the fluorine-based surfactant include a perfluoropolyether-based surfactant and a pseudosurfactant. Examples of the former include Krytox (manufactured by DuPont), and examples of the latter include perfluorooctanol.

The surfactant may be present, for example, in the hydrophobic fluid at or above a critical micelle concentration of the surfactant. The critical micelle concentration may be preferably 1 µM to 1000 µM, particularly 10 µM to 100 mM, for example. Furthermore, the interfacial tension of the surfactant is preferably 40 mN/m or less, and may be particularly 20 mN/m or less, for example.

In another implementation of the present technology, the first fluid may be a hydrophobic fluid, and the second fluid may be a hydrophilic fluid.

In this implementation, an emulsion containing the hydrophilic fluid as a dispersion medium and the hydrophobic fluid as a dispersoid may be formed in the particle sorting section 157. Examples of the hydrophobic fluid and the hydrophilic fluid are as described above.

Furthermore, this implementation may be applied to, for example, a case where only the microparticle of interest is further sorted from an emulsion in which the dispersion medium and the dispersoid are the hydrophobic fluid and the hydrophilic fluid, respectively and that contains the microparticle.

Furthermore, as an assay system that may be used in the present technology, it is possible to use not only a system in which a microparticle emits fluorescence but also a system in which an emulsion particle emits fluorescence. Therefore, in order to recover the emulsion containing the microparticle, the determination unit 105 may make a determination on the microparticle, may make a determination on the emulsion, or may make a determination on both the microparticle and the emulsion. As described above, in the present technology, whether the microparticle and/or the emulsion is to be sorted or not may be determined on the basis of information obtained from the microparticle and/or the emulsion.

In the recovery channel 159, the microparticle to be sorted among microparticles and/or the emulsion in which the first fluid is contained in the second fluid immiscible with the first fluid is recovered.

### 2. Second embodiment (microparticle sorting method)

A microparticle sorting method according to a second embodiment of the present technology includes a recovery step and a control step. The microparticle sorting method according to the present embodiment will be described below with reference to Fig. 19. Fig. 19 is a flowchart of the microparticle sorting method according to the present embodiment.

### (1) Recovery step S1901

In a recovery step S1901 in Fig. 19, the microparticle Po to be sorted in the first fluid flowing through the main channel 155 is recovered into the recovery channel 159 communicating with the main channel 155 by a negative pressure generated by the suction operation of the actuator. In the recovery step S1901 in the present embodiment, the procedure of recovering the microparticle Po in the first fluid flowing through the main channel 155 can be executed using the microparticle sorting device 100 equipped with the microchip described in the above 1. Details of the recovery of the microparticle Po are as described in the above 1. Therefore, the description of the details will be omitted.

### (2) Control step S1902

The suction operation of sucking the microparticle by generating a negative pressure in the recovery channel, and the suction operation and the discharge operation by generating a pressure change in the recovery channel are performed in the recovery step, and in a control step S1902 in Fig. 19, the drive interval between the suction operation and the discharge operation and/or the drive time from the suction operation to the end of the discharge operation are controlled. In the control step S1902 in the present embodiment, the procedure of controlling the drive interval between the suction operation and the discharge operation and/or the drive time from the suction operation to the end of the discharge operation may be executed using the microparticle sorting device equipped with the microchip described in the above 1. The details of the control of the drive interval and/or the drive time are as described in the above 1. Therefore, the description of the details will be omitted.

### 3. Third embodiment (microparticle sorting method)

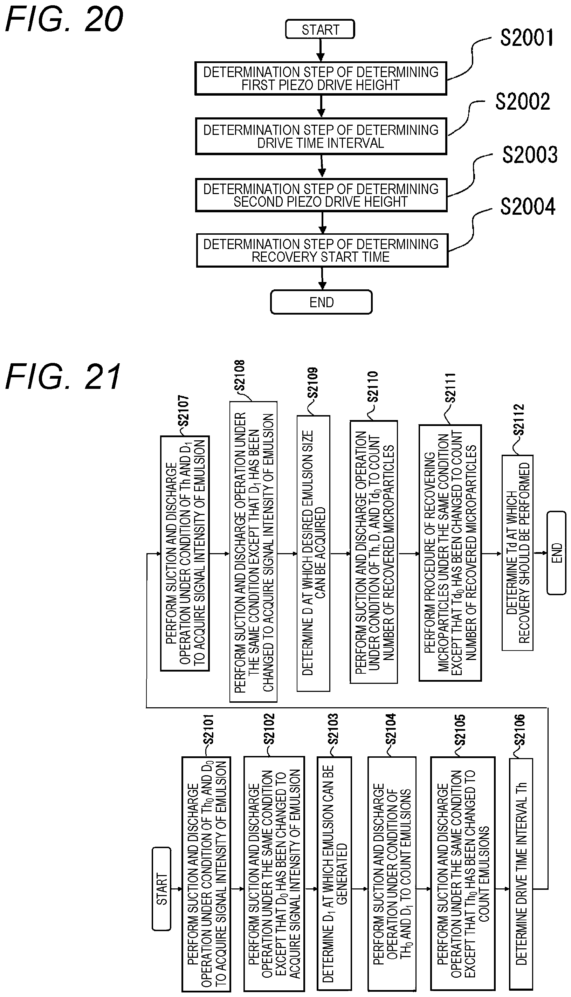

A microparticle sorting method according to a third embodiment of the present technology allows an automatic adjustment to the drive condition of the actuator 107 under which unwanted flow oscillation generated in the connection channel 170 during the recovery operation can be suppressed, and the emulsion E containing the microparticle Po to be sorted can be formed with a desired emulsion size. In the present embodiment, it is possible to reduce, by automatically adjusting the drive condition of the actuator 107, variations in unwanted oscillation suppressing effect due to variations between individuals or variations between lots of microchips. The microparticle sorting method according to the third embodiment of the present technology includes a determination step of determining a first piezo drive height D₁, a determination step of determining a drive time interval Th, a determination step of determining a second piezo drive height D, and a determination step of determining a recovery start time Td. The microparticle sorting method in the present embodiment will be described below with reference to Figs. 20 and 21. Fig. 20 is a flowchart of the microparticle sorting method according to the present embodiment. Fig. 21 is a flowchart illustrating details of the microparticle sorting method according to the present embodiment illustrated in Fig. 20.

### (1) Determination step S2001 of determining first piezo drive height

In a determination step S2001 of determining the first piezo drive height D₁ in Fig. 20, the first piezo drive height D₁ at which an emulsion can be generated of the drive voltage applied to the piezo element of the actuator 107 is determined. As illustrated in Fig. 21, the determination step of determining the first piezo drive height D₁ includes an acquiring step S2101 of acquiring the signal intensity of the emulsion, a repeating step S2102 of repeating the acquiring step of acquiring the signal intensity of the emulsion, and a determination step S2103 of determining the first piezo drive height D₁ of the drive voltage at which the emulsion can be generated.

In the acquiring step S2101 of acquiring the signal intensity of the emulsion in Fig. 21, in a case where the suction operation is performed at a predetermined piezo drive height D₀ and drive time interval Th₀, the signal intensity of the emulsion is acquired by the emulsion detection unit 108 located downstream of the recovery channel. In a repeating step S2102 of repeating the acquiring step of acquiring the signal intensity of the emulsion, the acquiring step of acquiring the signal intensity of the emulsion is repeated under the same conditions except that the piezo drive height D is changed to a value larger or smaller than D₀. Note that the piezo drive height D thus changed may be a drive height (voltage) increased or decreased relative to D₀ at a predetermined ratio. The predetermined ratio may be increased or decreased relative to D₀ in a range of 1% to 10%, for example. In the determination step S2103 of determining the drive height D₁ of the drive voltage at which the emulsion can be generated, any piezo drive height at which a signal intensity higher than a predetermined signal intensity at which it can be determined that the emulsion is generated is obtained from among the signal intensities (peak signal, area signal) of the emulsions acquired in the repeating step S2102 is determined as the first piezo drive height D₁ of the drive voltage at which the emulsion can be generated.

### (2) Determination step S2002 of determining drive time interval Th

In a determination step S2002 of determining the drive time interval Th in Fig. 20, the drive time interval Th that suppresses unwanted flow oscillation is determined. As illustrated in Fig. 21, the determination step of determining the drive time interval Th includes an emulsion counting step S2104 of counting the number of emulsions, a repeating step S2105 of repeating the emulsion counting step, and a determination step S2106 of determining the drive time interval Th.

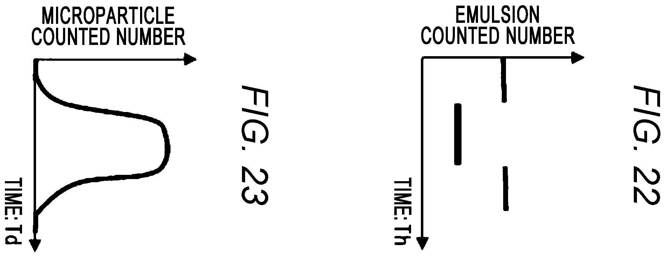

In the emulsion counting step S2104 of counting the number of emulsions in Fig. 21, the number of emulsions passing through an optical detection position in the emulsion detection region 164 located downstream of the recovery channel 159 is counted by the emulsion detection unit 108 in a case where the suction operation and the discharge operation are performed using the first piezo drive height D₁ determined in the determination step S2103 of determining the first piezo drive height D₁ of the drive voltage at which the emulsion can be generated under a condition where the drive time interval between the suction operation and the discharge operation is the predetermined Th₀. Here, in the emulsion counting step S2104, known (for example, 1 to 100 times of) suction operation and discharge operation may be performed to count the number of emulsions passing through the optical detection position in the emulsion detection region 164. In the repeating step S2105 of repeating the emulsion counting step, the emulsion counting step is repeatedly performed under the same conditions except that the drive time interval is changed to a time longer or shorter than Th₀. As a result, the counted numbers of emulsions recovered in the recovery channel 159 at various drive time intervals Th are obtained as illustrated in Fig. 22. In the determination step S2106 of determining the drive time interval, a time during which the counted number of emulsions is the smallest among the counted numbers of emulsions obtained in the repeating step S2105 is determined as the drive time interval Th. In a case where the suction operation and the discharge operation are performed at the drive time intervals, generation of an unwanted emulsion due to unwanted flow oscillation is most effectively suppressed. Here, in a case where there is a plurality of times during which the counted number of emulsions is the smallest, any time among the times or a median value or a minimum value among the times may be selected.

### (3) Determination step S2003 of determining second piezo drive height D

In a determination step S2003 of determining the second piezo drive height D in Fig. 20, the second piezo drive height D at which a desired emulsion size is obtained is determined. As illustrated in Fig. 21, the determination step of determining the second piezo drive height D includes an acquiring step S2107 of acquiring the signal intensity of the emulsion, a repeating step S2108 of repeating the acquiring step of acquiring the signal intensity of the emulsion, and a determination step S2109 of determining the second piezo drive height D of the drive voltage at which the desired emulsion size can be acquired.

In the acquiring step S2107 of acquiring the signal intensity of the emulsion in Fig. 21, the signal intensity of the emulsion in a case where the sorting operation is performed using the predetermined first piezo drive height D₁ determined in the previous step at the drive time intervals Th already determined is acquired. In the repeating step S2108 of repeating the acquiring step of acquiring the signal intensity of the emulsion, the acquiring step of acquiring the signal intensity of the emulsion is repeated under the same conditions except that the piezo drive height is changed to a value larger or smaller than D₁. Note that the piezo drive height thus changed may be a drive height (voltage) increased or decreased relative to D₁ at a predetermined ratio. In the determination step S2109 of determining the second piezo drive height D of the drive voltage at which a desired emulsion size can be acquired, a piezo drive height in a case where a signal intensity close to the signal intensity detected on the basis of the desired emulsion size is acquired from the signal intensities (peak signal, area signal, width signal) acquired in the repeating step S2108 is determined, on the basis of a correlation between the signal intensity and the emulsion size, as the second piezo drive height D at which the desired emulsion size can be acquired.

### (4) Determination step S2004 of determining recovery start time Td

In a determination step S2004 of determining the recovery start time Td in Fig. 20, the recovery start time (Delay Time) Td from the detection in the particle detection region 156 of the microparticle flowing through and from the sample fluid channel 152 and the start of the suction operation that is the recovery (sorting) operation is determined. Here, performing an adjustment so as to suppress unwanted oscillation before adjusting the recovery start time makes it possible to avoid the sucking of microparticles due to unwanted oscillation becoming noise for the adjustment to the recovery start time. It is not necessary to flow the microparticles in the channel before the determination step S2001 of determining the first piezo drive height, the determination step S2002 of determining the drive time interval, and the determination step S2003 of determining the second piezo drive height, but it is necessary to flow the microparticles after the determination step S2004 of determining the recovery start time. As illustrated in Fig. 21, the determination step of determining the recovery start time Td includes a particle counting step S2110 of counting the number of particles, a repeating step S2111 of repeating the particle counting step of counting the number of particles, and a determination step S2112 of determining the recovery start time.

In the particle counting step S2110 of counting the number of particles, the number of particles passing through the emulsion detection region 164 located downstream of the recovery channel 159 is counted in a case where the sorting operation is performed under conditions of the recovery start time from the detection of microparticles to the suction operation set to a predetermined recovery start time Td₀, and the drive time interval Th and the second piezo drive height D thus determined. Here, in the particle counting step S2110 of counting the number of particles, the sorting operation may be performed for a known number of particles (for example, 10 to 1000) to count the number of recovered particles. In the repeating step S2111 of repeating the particle counting step of counting the number of particles, the particle counting step of counting the number of particles is repeatedly performed under the same conditions except that the recovery start time is changed to a time longer or shorter than Td₀. As a result, the counted numbers of particles recovered in the recovery channel 159 at various recovery start times Td are obtained as illustrated in Fig. 23. Note that the recovery start time Td thus changed may be a time increased or decreased relative to Td₀ at a predetermined ratio. The predetermined ratio may be increased or decreased relative to D₀ in a range of 0.01% to 5%, for example. In the determination step S2112 of determining the recovery start time, a recovery start time that results in the counted number of particles being the largest among the counted numbers of particles obtained in the repeating step S2111 is determined as the recovery start time (optimal time) Td at which the recovery should be performed. Here, in a case where there is a plurality of times that results in the counted number of particles being the largest, any time among the times or a median value among the times may be selected.

Note that the present technology may also have following configurations.
[1] A microparticle sorting device including:
   a main channel through which a first fluid containing microparticles flows;
   a recovery channel communicating with the main channel;
   an actuator that performs a suction operation and a discharge operation by generating a pressure change in the recovery channel; and
   a control unit that applies a drive voltage to the actuator to control a drive interval between the suction operation and the discharge operation performed by the actuator and/or a drive time from the suction operation to an end of the discharge operation performed by the actuator.
[2] The microparticle sorting device according to [1], in which
   the suction operation is performed by generating a negative pressure in the recovery channel.
[3] The microparticle sorting device according to [1] or [2], in which
   the actuator increases a volume of an inner space of the recovery channel.
[4] The microparticle sorting device according to any one of [1] to [3], in which
   the control unit controls the drive interval and/or the drive time so as to reduce an amplitude of changes in flow velocity of a pulsating flow that is generated by the suction operation and in which a flow in a suction direction and a flow in a direction opposite to the suction direction are alternately repeated, and/or an amplitude of changes in flow velocity of a pulsating flow that is generated by the discharge operation and in which a flow in a discharge direction and a flow in a direction opposite to the discharge direction are alternately repeated.
[5] The microparticle sorting device according to any one of [1] to [4], in which
   the control unit controls the drive interval and/or the drive time so as to cause a peak of changes in flow velocity of a pulsating flow that is generated by the suction operation and in which a flow in a suction direction and a flow in a direction opposite to the suction direction are alternately repeated, and a peak of changes in flow velocity of a pulsating flow that is generated by the discharge operation and in which a flow in a discharge direction and a flow in a direction opposite to the discharge direction are alternately repeated to cancel each other out.
[6] The microparticle sorting device according to any one of [1] to [5], in which
   the control unit applies, to the actuator, a drive voltage with a drive waveform including a falling waveform and a rising waveform to perform the suction operation and the discharge operation, so as to make a drive voltage application time of the falling waveform and a drive voltage application time of the rising waveform different from each other.
[7] The microparticle sorting device according to any one of [1] to [5], in which
   the control unit applies, to the actuator, a drive voltage with a drive waveform including a falling waveform and a rising waveform to perform the suction operation and the discharge operation, so as to make a drive voltage application time of the falling waveform and a drive voltage application time of the rising waveform identical to each other.
[8] The microparticle sorting device according to any one of [1] to [7], in which
   in the recovery channel, a microparticle to be sorted among the microparticles and/or an emulsion in which the first fluid is contained in a second fluid immiscible with the first fluid is recovered.
[9] The microparticle sorting device according to any one of [1] to [8], further including an emulsion detection unit that detects the microparticles and/or the emulsion in the recovery channel.
[10] The microparticle sorting device according to [9], in which
   the control unit automatically controls the drive voltage, the drive interval, and the drive time of the actuator on the basis of optical information from the microparticles and/or the emulsion detected by the emulsion detection unit.
[11] The microparticle sorting device according to [9] or [10], in which
   the main channel further includes a particle detection unit that detects the microparticle to be sorted in the first fluid flowing through the main channel, and
   the control unit controls a time from the detection of the microparticle by the particle detection unit to the suction operation on the basis of optical information from the microparticles detected by the emulsion detection unit.
[12] A microparticle sorting method including:
   a recovery step of recovering microparticles in a first fluid flowing through a main channel into a recovery channel communicating with the main channel using a negative pressure generated by a suction operation of an actuator, in which in the recovery step, the suction operation and a discharge operation are performed by generating a pressure change in the recovery channel; and
   a control step of controlling a drive interval between the suction operation and the discharge operation and/or a drive time from the suction operation to an end of the discharge operation.

### REFERENCE SIGNS LIST

- 100: Microparticle sorting device
- 101: First light irradiation unit
- 102: Particle detection unit
- 103: Control unit
- 104: Signal processing unit
- 105: Determination unit
- 106: Sorting control unit
- 107: Actuator
- 108: Emulsion detection unit
- 109: Second light irradiation unit
- 150: Microparticle sorting microchip
- 155: Main channel
- 156: Particle detection region
- 157: Particle sorting section
- 158: Waste channel
- 159: Recovery channel
- 164: Emulsion detection region
- 165: Pressure chamber

## Claims

1. A microparticle sorting device comprising:
a main channel through which a first fluid containing microparticles flows;
a recovery channel communicating with the main channel;
an actuator that performs a suction operation and a discharge operation by generating a pressure change in the recovery channel; and
a control unit that applies a drive voltage to the actuator to control a drive interval between the suction operation and the discharge operation performed by the actuator and/or a drive time from the suction operation to an end of the discharge operation performed by the actuator.

2. The microparticle sorting device according to claim 1, wherein
the suction operation is performed by generating a negative pressure in the recovery channel.

3. The microparticle sorting device according to claim 1, wherein
the actuator increases a volume of an inner space of the recovery channel.

4. The microparticle sorting device according to claim 1, wherein
the control unit controls the drive interval and/or the drive time so as to reduce an amplitude of changes in flow velocity of a pulsating flow that is generated by the suction operation and in which a flow in a suction direction and a flow in a direction opposite to the suction direction are alternately repeated, and/or an amplitude of changes in flow velocity of a pulsating flow that is generated by the discharge operation and in which a flow in a discharge direction and a flow in a direction opposite to the discharge direction are alternately repeated.

5. The microparticle sorting device according to claim 1, wherein
the control unit controls the drive interval and/or the drive time so as to cause a peak of changes in flow velocity of a pulsating flow that is generated by the suction operation and in which a flow in a suction direction and a flow in a direction opposite to the suction direction are alternately repeated, and a peak of changes in flow velocity of a pulsating flow that is generated by the discharge operation and in which a flow in a discharge direction and a flow in a direction opposite to the discharge direction are alternately repeated to cancel each other out.

6. The microparticle sorting device according to claim 1, wherein
the control unit applies, to the actuator, a drive voltage with a drive waveform including a falling waveform and a rising waveform to perform the suction operation and the discharge operation, so as to make a drive voltage application time of the falling waveform and a drive voltage application time of the rising waveform different from each other.

7. The microparticle sorting device according to claim 1, wherein
the control unit applies, to the actuator, a drive voltage with a drive waveform including a falling waveform and a rising waveform to perform the suction operation and the discharge operation, so as to make a drive voltage application time of the falling waveform and a drive voltage application time of the rising waveform identical to each other.

8. The microparticle sorting device according to claim 1, wherein
in the recovery channel, a microparticle to be sorted among the microparticles and/or an emulsion in which the first fluid is contained in a second fluid immiscible with the first fluid is recovered.

9. The microparticle sorting device according to claim 8, further comprising an emulsion detection unit that detects the microparticles and/or the emulsion in the recovery channel.

10. The microparticle sorting device according to claim 9, wherein
the control unit automatically controls the drive voltage, the drive interval, and the drive time of the actuator on a basis of optical information from the microparticles and/or the emulsion detected by the emulsion detection unit.

11. The microparticle sorting device according to claim 9, wherein
the main channel further includes a particle detection unit that detects the microparticle to be sorted in the first fluid flowing through the main channel, and
the control unit controls a time from the detection of the microparticle by the particle detection unit to the suction operation on a basis of optical information from the microparticles detected by the emulsion detection unit.

12. A microparticle sorting method comprising:
a recovery step of recovering microparticles in a first fluid flowing through a main channel into a recovery channel communicating with the main channel using a negative pressure generated by a suction operation of an actuator, wherein in the recovery step, the suction operation and a discharge operation are performed by generating a pressure change in the recovery channel; and
a control step of controlling a drive interval between the suction operation and the discharge operation and/or a drive time from the suction operation to an end of the discharge operation.
